# EUROPEAN PATENT SPECIFICATION

(11) **EP 1 881 577 B1**
(45) Date of publication and mention of the grant of the patent: **16.03.2011**
(21) Application number: 07075620.0
(22) Date of filing: 20.07.2007
(51) Int. Cl.: H02G 3/10

(54) **Fastening plug for fastening a support unit for electrical installation material to a cable channel**
Befestigungsstecker zur Befestigung einer Stützeinheit für einen Elektroinstallationsartikel an einem Kabelkanal
Fixation de raccordement pour fixer une unité de support d'un matériel d'installation électrique sur un canal de câble

(30) Priority: 21.07.2006 NL 1032222
(43) Date of publication of application: 23.01.2008
(73) Proprietor: B.V. Kunststoffenindustrie Attema, 4203 NJ Gorinchem (NL)
(72) Inventor: De Hoog, Antonie, 4213 DE Dalem (NL)
(74) Representative: Brookhuis, Hendrik Jan Arnold

(56) References cited:
- NL-C2- 1 016 989
- US-A1- 3 871 430
- US-A1- 3 939 752

## Description

Fastening plug for fastening a support unit for electrical installation material to a cable channel.

The invention relates to a fastening plug for fastening a support unit for electrical installation material to a cable channel according to the preamble of claim 1. Such a plug is known from US-A-3 939 752.

In practice, various other designs of fastening elements of the abovementioned kind are known. These known plugs have a round head.

A first known plug has two resilient legs, whose ends which are furthest from the head are connected to one another. A flat auxiliary leg is formed between the legs which, like the other legs, starts from the head. The auxiliary leg serves to absorb forces which are exerted on the stem portion of the plug in a plane transverse to a plane through the legs. The auxiliary leg extends in the plane which runs transversely to the plane through the legs over a distance which is nearly as great as the diameter of a round opening in the cable channel into which the plug is inserted. As a result, the auxiliary leg provides reinforcement for the plug and for a relatively tight fit in the round opening.

A second known plug has a substantially flat, elongate body which starts from the head. Two legs start from the free end of the body on either side of the body, which legs extend towards and up to a certain distance from the head as the distance between them increases.

The drawback of the known plugs is that they can only be used for round openings as such plugs, once they have been inserted, can inadvertently, for example through vibrations, start to rotate around a centre axis thereof. In that case and if the plug were inserted into an elongate opening, it is possible that the barbed elements of the legs come out of the material around the opening, as a result of which the plug may unintentionally fall out of the opening.

Another drawback of the known plugs is that they are of relatively weak construction.

It is an object of the invention to overcome the abovementioned drawbacks of the known technique.

The above object is achieved according to the invention, firstly by providing a plug according to claim 1. This achieves the result that when the plug is inserted into an elongate opening, it cannot turn inadvertently, and thus the plug is prevented from falling out of the opening being very simple to insert the plug into an opening in a wall.

Further embodiments are described in the dependent claims.

The invention will be described below with reference to an exemplary embodiment as shown in the attached drawing, in which:
Fig. 1 shows a front view of a first known assembly of a support unit secured to a cable channel by means of fastening plugs;
Fig. 2 shows a perspective view of a known fastening plug of the assembly from Fig. 1;
Fig. 3 shows a front view of a second known assembly of a support unit secured to a cable channel without the use of fastening plugs;
Fig. 4 shows a perspective view of an embodiment of a fastening plug according to the invention;
Fig. 5 shows the plug illustrated in Fig. 4 in another perspective;
Fig. 6 shows a cross section through part of an assembly like that from Fig. 3 in which a plug such as that illustrated in Fig. 5 is used;
Fig. 7 shows a cross section along the line VII-VII in Fig. 6;
Fig. 8 shows a cross section along the line VIII-VIII in Fig. 6; and
Fig. 9 shows a top view of a part of the assembly illustrated in Fig. 6.

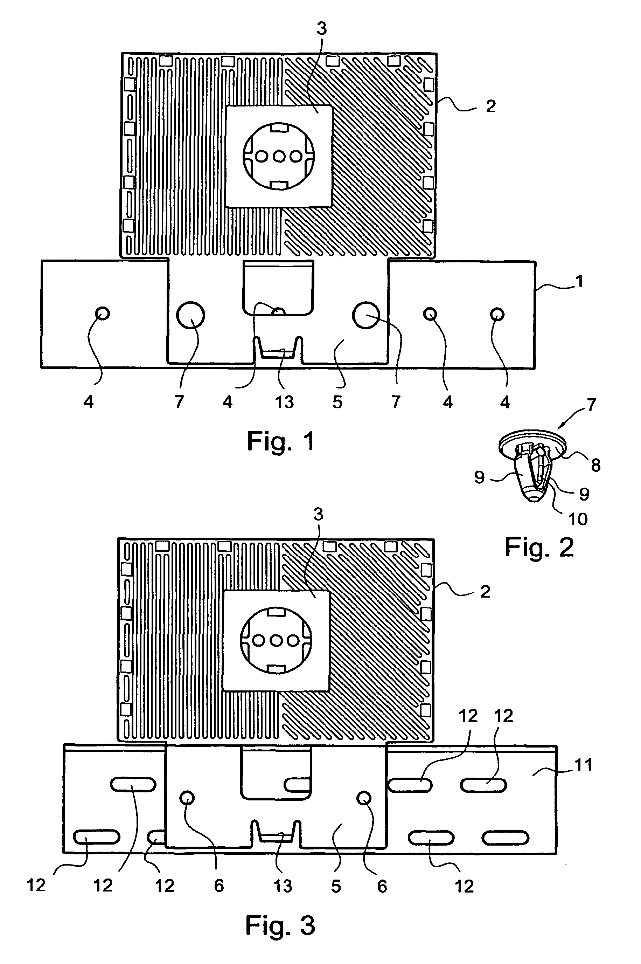

The first known assembly shown in Fig. 1 comprises a cable channel 1, a substantially panel-shaped support unit 2 and an electrical socket 3. The socket 3 is an example of electrical installation material. The cable channel 1 has openings 4 in at least one of its walls. The support unit 2 has a section 5 which is placed against a wall of the channel with openings 4. The installation portion 5 of the support unit 2 has openings 6 (Fig. 3) which are situated opposite openings 4 in the channel 1. A known plug 7 is inserted into each pair of openings 4, 6 which are located opposite one another.

Fig. 2 shows an example of the known plug 7. The plug 7 has a head 8 and a stem portion starting from the head which comprises resilient legs 9. The ends of the legs 9 are joined at a distance from the head 8. The stem portion has an auxiliary leg 10 between the resilient legs 9, which auxiliary leg 10 serves for strength and an improved fit in an opening 4. The legs 9 are shaped such that they form barbed elements which, after passing an opening 4, extend over an edge region of the opening 4, viewed in the direction of insertion of the plug 7, behind the wall of the channel 1 and prevent the inserted plug 7 from being pulled out of the openings 4.

The openings 4 of the cable channel 1 from Fig. 1 are round. This means that when a plug 7 which is suitable for an elongate opening is used for a round opening 4, the plug 7 could fall out of the elongate opening.

Compared to the first known assembly illustrated in Fig. 1, the cable channel 1 with round openings 4 has been replaced in the second known assembly according to Fig. 3 by a cable channel 11 with elongate openings 12. As the support unit 2 cannot be attached to the cable channel 11 by means of plugs 7, the support unit 2 is clamped to the cable channel 11 by means of a resilient tongue 13 of the installation portion 5 of the support unit 2, which is inserted in an elongate opening 12, and a flap (not shown) supported against the inside of the wall of the cable channel 11 of the installation portion 5 of the support unit 2. This construction requires the use of a support unit 2 having such a tongue 13, which increases the costs of a support unit 2.

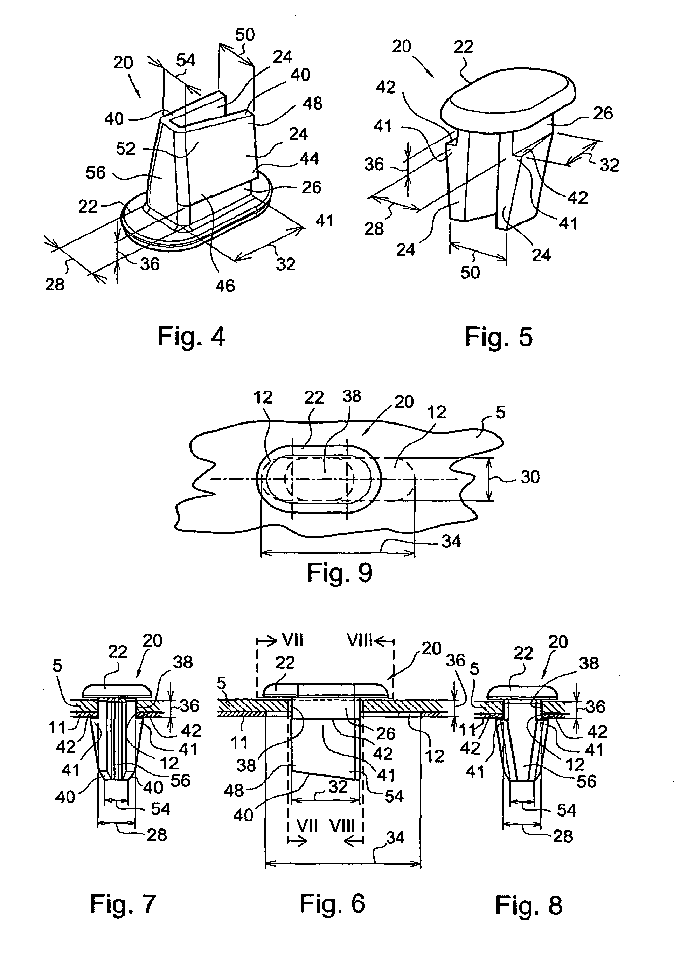

The embodiment of a plug 20 according to the invention illustrated in Figs 4 to 8 comprises at least one head 22 and two legs 24 starting from the head 22. The head 22 may have any shape which prevents the head 22 from being able to pass through an elongate opening 12 of the cable channel 11. The head 22 illustrated in Figs 4 to 9 is elongate. The legs 24 are substantially flat. The legs 24 are arranged opposite one another in such a manner that their principal planes extend in the longitudinal direction of the head 22. A distance 28 between principal planes of the base sections 26 of the legs 24, which principal planes are facing away from one another, is smaller than a smallest dimension 30 (Fig. 9) of an elongate opening 12 of the cable channel 11. A dimension 32 of the base sections 26, viewed in the longitudinal direction of the elongate head 22, is larger than the smallest dimension 30 of the elongate opening 12, but smaller than a largest dimension 34 of the elongate opening 12. Measured at right angles to a principal plane of the head 22, the base sections 26 of the legs have a height 36, which is greater than a thickness of the wall around the opening 12 of the cable channel 11 plus the thickness of the opening 6 of the installation portion 5 of the support unit 2.

Figs 7 to 9 show an opening of the installation portion 5 of the support unit 2 for inserting a plug 20 shown as an elongate opening 38 having slightly larger dimensions than a circumference around the base sections 26 of the legs 24. Whether or not an opening for inserting a plug 20 has to be elongate depends on whether the plug 20 has to be suitable for use with both types of cable channels 1 and 11 and thus on the dimensions of the round openings 4 and of the elongate openings 12 thereof.

The legs 24 are not plane-parallel from the base sections 26 and optionally from the head 22 towards the edges 40 of the legs 24 which are furthest from the head 22. As a result thereof, the legs 24 are not parallel in a plane parallel to a principal plane of the head 22.

At the transitions of the base sections 26 with the remainder of the legs 24, the sides of the legs 24 which are facing away from one another are staggered with respect to one another, so that they define widened sections 41 with stop faces 42 which are turned towards the head 22 and which are parallel to a principal plane of the head 22. Parallel to a principal plane, the stop faces 42 of the head 22 have a dimension which, at a location 44 (corner point) with a largest distance between the legs 24, is larger than the smallest dimension 30 of the opening 12 of the cable channel 11. At a location 46 (corner point) with a smallest distance between the legs 24, said dimension of the stop faces 42 is smaller than the smallest dimension 30 of the opening 12. Between location 44 and location 46, said dimension of the stop faces 42 gradually decreases. As a result thereof and because the material of the stem portion of the plug 20 is suitably elastic, the widened sections with the stop faces 42 of the legs 24 define barbed elements.

Between the long end edges of the stop faces 42 and the end edges 40 of the legs 24, a distance between those sides of the legs which are facing away from one another gradually decreases to a dimension which, at least perpendicularly above location 46 (viewed from the head 22), is smaller than the smallest dimension 30 of the opening 12 of the cable channel 11.

Between one end of the edge 40 of each leg 24, at a location 48 (corner point) with a largest distance 50 between the sides of the legs 24 which are facing away from one another, and a location 52 (corner point) at the other end of the edge 40 with a smallest distance 54 between those sides of the legs 24 which are facing away from one another, a distance (the height) increases up to the head 22.

Due to the fact that the stem portion of the plug 20 has an elongate basic cross section of the abovementioned dimensions parallel to a principal plane of the head 22, the plug 20 is prevented from rotating in an elongate opening 12 of a cable channel 11, thus preventing loss of the plug due to rotation thereof.

Due to the fact that the legs 24 preferably have relatively large dimensions, they increase the strength and dimensional stability of the plug 20.

In addition, the relatively large dimensions of the flat legs 24 of the plug 20 result in large stop faces 42 of the barbed elements, thus leading to improved securing of the plug 20 in an opening 12 of a cable channel 11.

Due to the fact that the legs 24, viewed in a plane parallel to a principal plane of the head 22, are preferably not parallel, the plug 20 can more readily be inserted into an opening 12, the plug 20 being inserted at an angle into the opening 12 firstly by the section of the legs 24 at location 52 with the smallest distance between the sides which are facing away from one another. By then tilting the plug 20 in such a manner that a principal plane of the head 22 comes to lie parallel to the edge region of the opening 12, the remainder of the legs is turned into the opening 12 without the legs 24 having to be pressed together. As they do not have to be pressed together, the legs 24 can be relatively thick, which is advantageous with regard to their strength.

As a smallest distance between those sides of the legs 24 which are facing away from one another, from the barbed elements 41 to a greater distance from the head 22, preferably decreases to a dimension 54 which is smaller than the smallest dimension 30 of the opening 12 of the cable channel, the section of the legs 24 which is preferably inserted into the opening 12 first, i.e. the section comprising the location 52 of each leg 24, can be inserted into the opening 12 even more readily and the plug 20 can then be tilted more readily in order to fit the legs completely into the opening 12.

As the height of each leg 24, from the edges 40 of the legs 24 to the head 22, between location 48 and location 52, preferably increases, the section of the legs 24 which is preferably inserted first into an opening 12 of a cable channel 11, i.e. that section comprising the location 52 of each leg 24, can be inserted into the opening 12 even more easily and the plug 20 can then be tilted more readily in order to fit the legs completely into the opening 12.

It will be clear from the above description in connection with the associated figures, that in the illustrated embodiment:
- a distance between those principal planes of the legs 24 which are facing away from one another, at a first corner point 52 of the principal plane of each leg 24, which first corner point 52 is facing away from the head 22, is smaller than a distance between those principal planes of the legs 24 which are facing away from one another at an opposite second corner point 48 of the principal plane of each leg 24, which second corner point 48 is facing away from the head 22;
- a distance between those principal planes of the legs 24 which are facing away from one another, at a third corner point 46 of the principal plane of each leg 24, which third corner point 46 is near the head 22, is equal to a distance between those principal planes of the legs 24 which are facing away from one another at the diagonally opposite second corner point 48 of the principal plane of each leg 24;
- a distance between those sides of the legs 24 which are facing away from one another decreases from the third corner point 46 which is further from the head 22 to a dimension 54 which is smaller than the smallest dimension 30 of the opening 12 of the cable channel 11, said dimension 54 in particular being smaller than said distance 28 between those sides of the legs which are facing away from one another, measured between the barbed elements and the head 22;
- the dimensions of the legs 24, going from the first corner point 52 towards the second corner point 48, decrease at right angles to the principal plane of the head 22; and
- a distance between those sides of the legs which are facing away from one another at the third corner point 46 of the principal plane of each leg 24 is smaller than a distance between those principal planes of the legs 24 which are facing away from one another at an opposite fourth corner point 44 of the principal plane of each leg 24, which fourth corner point 44 is near the head 22, in order to form the barbed elements 41.

With regard to the illustrated embodiment, the orientation of those sides of the legs 24 which are facing away from one another can be summarized as follows: the geometrical planes of those sides of the legs 24 which are facing away from one another cross one another in a line which does not run parallel to the principal plane of the head 22 and which is not at right angles to the principal plane of the head 22. Said sides of the legs 24 may also be formed differently, for example be curved, while retaining said orientation.

Preferably, the plug 20 has a connecting piece 56 which connects the legs 24 to one another from the head 22 along locations 46 and 52. Preferably, the legs 24 and the connecting piece 56 form a single unit. The connecting piece 56 considerably improves the strength and rigidity of the plug 20.

## Claims

1. Fastening plug (20) for fastening a support unit (2) for electrical installation material (3) to a cable channel (11), which fastening plug (20) comprises a head (22) and a stem portion starting from the head, the stem portion comprising two legs (24) which can be moved towards and away from one another in a flexible manner with respect to the head and which each have a barbed element (41), the head being dimensioned such that the head is unable to pass through an opening (38) of the support unit (2), the stem portion can be inserted first through an opening (38) of the support unit and then through the opening (12) of the cable channel while moving the legs towards one another in an elastic manner, and the barbed elements extend beyond the wall over an edge of an opening (12) in a wall of the cable channel after having been inserted sufficiently far, **characterized in that** a distance (28) between a side of a first one of the legs and a side of the second one of the legs, said sides facing away from one another in a first direction, measured between the barbed elements and the head, is smaller than the smallest dimension (30) of the opening (12) in the wall of the cable channel, **in that** the legs (24), in a second direction, which is parallel to a principal plane of the head (20) and transversely to the first direction, have a dimension (32) which is larger than the smallest dimension of the opening (12) of the cable channel (11), and **in that** a distance between said sides of the legs (24), at a first corner point (52) of said sides of the legs (24), which first corner point (52) is situated facing away from the head (22), is smaller than a distance between said sides of the legs (24) at an opposite second corner point (48) of said sides of the legs (24), which second corner point (48) is situated facing away from the head (22).

2. Fastening plug (20) according to claim 1, **characterized in that** a distance between said sides of the legs (24), at a third corner point (46) of said sides of the legs (24), which third corner point (46) is near the head (22), is equal to a distance between said sides of the legs (24) at the diagonally opposite second corner point (48) of said sides of the legs (24).

3. Fastening plug (20) according to claim 2, **characterized in that** a distance between said sides of the legs (24) decreases from the third corner point (46) which is further from the head (22) to a dimension (54) which is smaller than the smallest dimension (30) of the opening (12) of the cable channel (11).

4. Fastening plug (20) according to claim 3, **characterized in that** said dimension (54) is smaller than said distance (28) between said sides of the legs, measured between the barbed elements and the head (22).

5. Fastening plug (20) according to any of the preceding claims, **characterized in that** the dimensions of the legs (24), going from the first corner point (52) towards the second corner point (48), decrease at right angles to the principal plane of the head (22).

6. Fastening plug (20) according to any of the preceding claims, **characterized in that** a distance between said sides of the legs at the third corner point (46) of said sides of the legs (24) is smaller than a distance between said sides of the legs (24) at an opposite fourth corner point (44) of said sides of the legs (24), which fourth corner point (44) is near the head (22), in order to form the barbed elements (41).

7. Fastening plug (20) according to any of the preceding claims, **characterized in that** geometrical planes of said sides of the legs (24) cross one another in a line which does not run parallel to the principal plane of the head (22) and which is not at right angles to the principal plane of the head (22).

8. Fastening plug (20) according to any of the preceding claims, **characterized in that** a connecting piece (56) is formed between edge regions of the legs (24) which are raised and start from the head (22), near the first corner points (52).

9. Fastening plug (20) according to claim 8, **characterized in that** the legs (24) and the connecting piece (56) form a single unit.

## Patentansprüche

1. Befestigungsbolzen (20) zum Befestigen einer Halterungseinheit (2) für eine elektrische Installationsbaugruppe (3) an einem Kabelkanal (11), wobei der Befestigungsbolzen (20) einen Kopf (22) und einen Schaftabschnitt am Kopf umfasst, wobei der Schaftabschnitt zwei Beine (24) umfasst, welche zueinander hin und voneinander weg in einer flexiblen Weise bezüglich des Kopfes bewegbar sind und wobei jedes Bein ein Widerhakenelement (41) aufweist, wobei der Kopf derart ausgelegt ist, dass der Kopf nicht durch eine Öffnung (38) der Halterungseinheit (2) passt, wobei der Schaftabschnitt zuerst durch eine Öffnung (38) der Halterungseinheit und dann durch die Öffnung (12) des Kabelkanals einführbar ist während die Beine in einer elastischen Weise zueinander bewegt werden, und wobei sich die Widerhakenelemente hinter der Wand über eine Kante einer Öffnung (12) in einer Wand des Kabelkanals erstrecken, nachdem sie ausreichend weit eingeführt worden sind,
**dadurch gekennzeichnet,**
**dass** ein Abstand (28) zwischen einer Seite eines ersten der Beine und einer Seite des zweiten der Beine, wobei die Seiten in einer ersten Richtung voneinander weg weisen, zwischen den Widerhakenelementen und dem Kopf gemessen, kleiner als die kleinste Abmessung (30) der Öffnung (12) in der Wand des Kabelkanals ist, dass die Beine (24) in einer zweiten Richtung, welche parallel zu einer Hauptebene des Kopfes (20) und quer zu der ersten Richtung ist, eine Abmessung (32) aufweisen, welche größer als die kleinste Abmessung der Öffnung (12) des Kabelkanals (11) ist, und dass ein Abstand zwischen den Seiten der Beine (24) an einem ersten Eckpunkt (52) der Seiten der Beine (24), wobei der erste Eckpunkt (52) abgewandt von dem Kopf (22) angeordnet ist, kleiner als ein Abstand zwischen den Seiten der Beine (24) an einem entgegengesetzten zweiten Eckpunkt (48) der Seiten der Beine (24) ist, wobei der zweite Eckpunkt (48) abgewandt von dem Kopf (22) angeordnet ist.

2. Befestigungsbolzen (20) nach Anspruch 1, **dadurch gekennzeichnet, dass** ein Abstand zwischen den Seiten der Beine (24) an einem dritten Eckpunkt (46) der Seiten der Beine (24), wobei der dritte Eckpunkt (46) in der Nähe des Kopfes (22) liegt, gleich einem Abstand zwischen den Seiten der Beine (24) an dem diagonal gegenüberliegenden zweiten Eckpunkt (48) der Seiten der Beine (24) ist.

3. Befestigungsbolzen (20) nach Anspruch 2, **dadurch gekennzeichnet, dass** ein Abstand zwischen den Seiten der Beine (24) von dem dritten Eckpunkt (46), welcher weiter entfernt von dem Kopf (22) liegt, sich auf eine Abmessung (54) verringert, welche kleiner als die kleinste Abmessung (30) der Öffnung (12) des Kabelkanals (11) ist.

4. Befestigungsbolzen (20) nach Anspruch 3, **dadurch gekennzeichnet, dass** die Abmessung (54) kleiner als der Abstand (28) zwischen den Seiten der Beine gemessen zwischen den Widerhakenelementen und dem Kopf (22) ist.

5. Befestigungsbolzen (20) nach einem der vorhergehenden Ansprüche, **dadurch gekennzeichnet, dass** die Abmessungen der Beine (24), welche von dem ersten Eckpunkt (52) zu dem zweiten Eckpunkt (48) verlaufen, im rechten Winkel zu der Hauptebene des Kopfes (22) abnehmen.

6. Befestigungsbolzen (20) nach einem der vorhergehenden Ansprüche, **dadurch gekennzeichnet, dass** ein Abstand zwischen den Seiten der Beine an dem dritten Eckpunkt (46) der Seiten der Beine (24) kleiner als ein Abstand zwischen den Seiten der Beine (24) an einem gegenüberliegenden vierten Eckpunkt (44) der Seiten der Beine (24) ist, wobei der vierte Eckpunkt (44) in der Nähe des Kopfes (22) liegt, um die Widerhakenelemente (41) auszubilden.

7. Befestigungsbolzen (20) nach einem der vorhergehenden Ansprüche, **dadurch gekennzeichnet, dass** sich geometrische Ebenen der Seiten der Beine (24) einander in einer Linie schneiden, welche nicht parallel zu der Hauptebene des Kopfes (22) liegt und welche keinen rechten Winkel zu der Hauptebene des Kopfes (22) aufweist.

8. Befestigungsbolzen (20) nach einem der vorhergehenden Ansprüche, **dadurch gekennzeichnet, dass** ein Verbindungsstück (56) zwischen Randbereichen der Beine (24), welche sich von dem Kopf (22) erheben und an diesem beginnen, in der Nähe des ersten Eckpunkts (52) ausgebildet ist.

9. Befestigungsbolzen (20) nach Anspruch 8, **dadurch gekennzeichnet, dass** die Beine (24) und das Verbindungsstück (56) eine einzige Einheit ausbilden.

## Revendications

1. Connecteur mâle de fixation (20) pour fixer une unité de support (2) pour un matériau d'installation électrique (3) à un canal de câble (11), lequel connecteur mâle de fixation (20) comprend une tête (22) et une partie de tige commençant à partir de la tête, la partie de tige comprenant deux pattes (24) qui peuvent être déplacées vers et à distance l'une de l'autre d'une manière flexible par rapport à la tête et qui ont chacune un élément à ardillon (41), la tête étant dimensionnée de sorte que la tête ne peut pas passer par une ouverture (38) de l'unité de support (2), la partie de tige peut être insérée tout d'abord dans une ouverture (38) de l'unité de support et ensuite dans l'ouverture (12) du canal de câble tout en déplaçant les pattes l'une vers l'autre d'une manière élastique, et les éléments à ardillon s'étendent au-delà de la paroi sur un bord d'une ouverture (12) dans une paroi du canal de câble après avoir été insérés suffisamment loin, **caractérisé en ce qu'**une distance (28) entre un côté d'une première patte et un côté de la deuxième patte, lesdits côtés étant détourné l'un de l'autre dans une première direction, mesurée entre les éléments à ardillon et la tête, est plus petite que la plus petite dimension (30) de l'ouverture (12) dans la paroi du canal de câble, **en ce que** les pattes (24), dans une deuxième direction qui est parallèle à un plan principal de la tête (20) et transversale à la première direction, ont une dimension (32) qui est plus importante que la plus petite dimension de l'ouverture (12) du canal de câble (11) et **en ce qu'**une distance entre lesdits côtés des pattes (24), au niveau d'un premier point de coin (52) desdits côtés des pattes (24), lequel premier point de coin (52) est situé détourné de la tête (22), est plus petite qu'une distance entre lesdits côtés des pattes (24) au niveau d'un deuxième point de coin (48) opposé desdits côtés des pattes (24), ledit deuxième point de coin (48) est situé détourné de la tête (22).

2. Connecteur mâle de fixation (20) selon la revendication 1, **caractérisé en ce qu'**une distance entre lesdits côtés des pattes (24), au niveau d'un troisième point de coin (46) desdits côtés des pattes (24), lequel troisième point de coin (46) est à proximité de la tête (22), est égale à une distance entre lesdits côtés des pattes (24) au niveau du deuxième point de coin (48) diagonalement opposé desdits côtés des pattes (24).

3. Connecteur mâle de fixation (20) selon la revendication 2, **caractérisé en ce qu'**une distance entre lesdits côtés des pattes (24) diminue à partir du troisième point de coin (46) qui est plus éloigné de la tête (22) jusqu'à une dimension (54) qui est plus petite que la plus petite dimension (30) de l'ouverture (12) du canal de câble (11).

4. Connecteur mâle de fixation (20) selon la revendication 3, **caractérisé en ce que** ladite dimension (54) est plus petite que ladite distance (28) entre lesdits côtés des pattes, mesurée entre les éléments à ardillons et la tête (22).

5. Connecteur mâle de fixation (20) selon l'une quelconque des revendications précédentes, **caractérisé en ce que** les dimensions des pattes (24) allant du premier point de coin (52) vers le deuxième point de coin (48), diminuent en angle droit par rapport au plan principal de la tête (22).

6. Connecteur mâle de fixation (20) selon l'une quelconque des revendications précédentes, **caractérisé en ce qu'**une distance entre lesdits côtés des pattes au niveau du troisième point de coin (46) desdits côtés des pattes (24) est inférieure à une distance entre lesdits côtés des pattes (24) au niveau d'un quatrième point de coin (44) opposé desdits côtés des pattes (24), lequel quatrième point de coin (44) est à proximité de la tête (22) afin de former les éléments à ardillon (41).

7. Connecteur mâle de fixation (20) selon l'une quelconque des revendications précédentes, **caractérisé en ce que** des plans géométriques desdits côtés des pattes (24) se croisent sur une ligne qui ne s'étend pas parallèlement au plan principal de la tête (22) et qui n'est pas en angle droit par rapport au plan principal de la tête (22).

8. Connecteur mâle de fixation (20) selon l'une quelconque des revendications précédentes, **caractérisé en ce qu'**une pièce de raccordement (56) est formée entre des régions de bord des pattes (24) qui sont relevées et commencent à partir de la tête (22), à proximité des premiers points de coin (52).

9. Connecteur mâle de fixation (20) selon la revendication 8, **caractérisé en ce que** les pattes (24) et la pièce de raccordement (56) forment une unité unique.
